(19)

Europäisches Patentamt
European Patent Office
Office européen des brevets

(11) **EP 4 589 080 A1**

(12) **EUROPEAN PATENT APPLICATION**
published in accordance with Art. 153(4) EPC

(43) Date of publication:
**23.07.2025 Bulletin 2025/30**

(21) Application number: **23865241.6**

(22) Date of filing: **25.08.2023**

(51) International Patent Classification (IPC):
**E02F 9/20** *(2006.01)*        **E02F 9/26** *(2006.01)*

(52) Cooperative Patent Classification (CPC):
**E02F 9/20; E02F 9/26**

(86) International application number:
**PCT/JP2023/030802**

(87) International publication number:
**WO 2024/057884 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022   JP 2022147775**

(71) Applicant: **Hitachi Construction Machinery Co.,
Ltd.
Tokyo 110-0015 (JP)**

(72) Inventors:
• **SAITOH Teppei
  Tokyo 100-8280 (JP)**

• **KOTANI Tadashi
  Tokyo 100-8280 (JP)**
• **NARIKAWA Ryu
  Tokyo 100-8280 (JP)**
• **ISHIMOTO Hidefumi
  Tsuchiura-shi, Ibaraki 300-0013 (JP)**
• **ITO Hideaki
  Tsuchiura-shi, Ibaraki 300-0013 (JP)**
• **SATOU Kei
  Tsuchiura-shi, Ibaraki 300-0013 (JP)**

(74) Representative: **MERH-IP Matias Erny Reichl
Hoffmann
Patentanwälte PartG mbB
Paul-Heyse-Straße 29
80336 München (DE)**

(54) **LOADING MACHINE AND CONTROL DEVICE**

(57)    The loading machine comprises a vehicle body, a working device attached to the vehicle body, a communication device that communicates directly or via a vehicle management device with a hauling vehicle, and a controller that determines the completion of loading of transported materials onto the hauling vehicle and outputs a start command to the hauling vehicle via the communication device. In the loading machine, the controller estimates the necessary start preparation time from when the hauling vehicle begins start preparation to when it becomes ready to start, based on model data that includes information indicating characteristics re-
lated to the hauling operation of the hauling vehicle. Then, based on the operational status data of the loading machine, the controller estimates the remaining loading time required from the current time until the completion of loading onto the hauling vehicle, calculates the difference time between the remaining loading time and the necessary start preparation time, and outputs a start preparation command to the hauling vehicle via the communication device when the difference time falls below a preset set value. This allows the hauling vehicle to be promptly started after the completion of the loading operation, thereby improving productivity at the site.

EP 4 589 080 A1

[FIG.3]

# Description

## Technical Field

The present invention relates to loading machines such as hydraulic excavators and vehicle management devices for loading transported materials onto hauling vehicles.

## Background Art

In recent years, the automation and semi-automation of hydraulic excavators have been advancing. By partially automating the operation of hydraulic excavators, the burden on operators is reduced. Hydraulic excavators have an aspect as loading machines for loading transported materials such as excavated earth and sand onto hauling vehicles like dump trucks. In mines and similar environments, unmanned hauling vehicles may be operated, requiring a coordination function between the hydraulic excavator and the hauling vehicle.

As a coordination function between hydraulic excavators and hauling vehicles, a hydraulic excavator is known that determines the progress of the loading operation based on the load amount of the transported materials on the hauling vehicle and commands the hauling vehicle to start once the loading operation is complete (Patent Document 1).

## Prior Art Document

## Patent Document

Patent Document 1: JP 2020-20156 A

## Summary of the Invention

## Problem to be Solved by the Invention

However, hauling vehicles require start preparation time to increase the engine speed to a predetermined level or to release the parking brake, and it takes time from receiving the command to actually being able to start. Even in the technology described in Patent Document 1, dead time occurs due to the start preparation of the hauling vehicle after the completion of the loading operation by the hydraulic excavator. This dead time reduces the machine operating rate at the site and consequently decreases productivity.

The objective of the present invention is to provide a loading machine and vehicle management device that can promptly start the hauling vehicle after the completion of the loading operation, thereby improving productivity at the site.

## Means for Solving the Problem

To achieve the above objective, the loading machine of the present invention includes a vehicle body, a working device attached to the vehicle body for performing loading operations of transported materials onto a hauling vehicle, a communication device for communicating directly or via a vehicle management device with the hauling vehicle, and a controller for determining the completion of loading onto the hauling vehicle and outputting a start command to the hauling vehicle via the communication device. In the loading machine, the controller stores or receives model data containing information indicating characteristics related to the transport operation of the hauling vehicle, and based on the model data, estimates the necessary start preparation time from when the hauling vehicle begins start preparation to when it becomes ready to start. Then, the controller estimates the remaining loading time required from the current time until the completion of loading onto the hauling vehicle based on the loading machine-side operating state data, which is the operating state data of the loading machine, calculates the difference time between the estimated remaining loading time and the necessary start preparation time, and outputs a start preparation command to the hauling vehicle via the communication device when the calculated difference time falls below a preset value.

## Advantages of the Invention

According to the present invention, the hauling vehicle can be promptly started after the completion of the loading operation, thereby improving productivity at the site.

## Brief Description of the Drawings

[FIG. 1] A schematic diagram of a hydraulic excavator, which is an example of a loading machine according to the first embodiment of the present invention.

[FIG. 2] A schematic diagram representing an example of a work site where the loading machine according to the first embodiment of the present invention operates.

[FIG. 3] A block diagram showing the main functions of the controller equipped in the loading machine according to the first embodiment of the present invention.

[FIG. 4] An example of a flowchart representing the processing procedure of start command output by the controller equipped in the loading machine according to the first embodiment of the present invention.

[FIG. 5] An example of a timing chart showing the operation of a hauling vehicle cooperating with the loading machine according to the first embodiment of the present invention.

[FIG. 6] An example of a screen displayed on the display device of a hauling vehicle by a display command from the controller equipped in the loading machine according to the first embodiment of the present invention.

[FIG. 7] A block diagram showing the main functions of the controller equipped in the loading machine according to the second embodiment of the present invention.

[FIG. 8] An example of a flowchart representing the update procedure of the necessary start preparation time by the controller equipped in the loading machine according to the second embodiment of the present invention.

[FIG. 9] A block diagram showing the main functions of the vehicle management device according to the third embodiment of the present invention.

Modes for Carrying Out the Invention

Hereinafter, an embodiment in which the invention is applied to a large hydraulic excavator capable of autonomous operation as an example of a loading machine will be described. However, the present invention is applicable to loading machines in general that cooperate with hauling vehicles, including not only medium-sized or smaller hydraulic excavators than large hydraulic excavators, but also other loading machines such as crane trucks, bulldozers, and wheel loaders. Additionally, as hauling vehicles, not only dump trucks but also crawler-type vehicles such as carrier crawlers can be applied.

(First Embodiment)

(1) Loading Machine

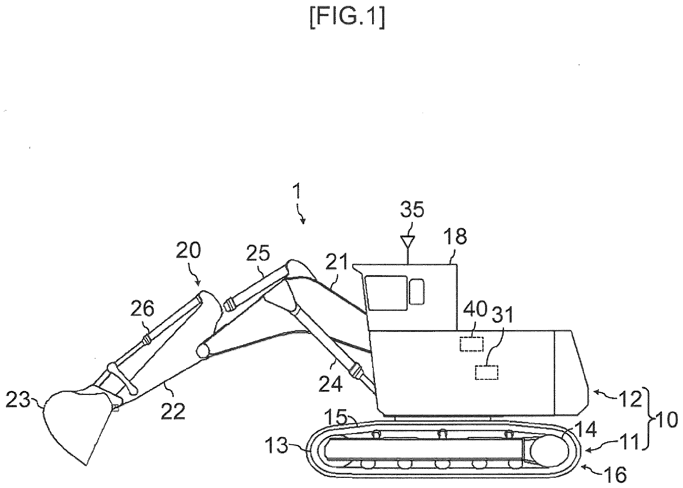

FIG. 1 is a schematic diagram of a hydraulic excavator, which is an example of a loading machine according to the first embodiment of the present invention. The hydraulic excavator 1 shown in the figure is configured to include a vehicle body 10 and a front working machine 20. The vehicle body 10 is configured to include a travel body 11 and a swing body 12.

The travel body 11 is equipped with left and right crawlers (travel devices) 16, which include an idler 13 as a free wheel, a drive tumbler 14 as a drive wheel, and an endless track 15 looped around the idler 13 and the drive tumbler 14. The drive tumbler 14 is driven by left and right travel motors (not shown), and the endless track 15 circulates between the idler 13 and the drive tumbler 14, allowing the hydraulic excavator 1 to travel. For the travel motors, hydraulic motors are used, for example.

The swing body 12 is provided on the upper part of the travel body 11 via a swing device (not shown) and can swing left and right. The swing device that connects the swing body 12 to the travel body 11 includes a swing motor (not shown), and by driving the swing motor, the swing body 12 swings counterclockwise or clockwise relative to the travel body 11. For the swing motor, a hydraulic motor is used, for example. At the front of the swing body 12 (in this embodiment, the front left side), an operator's cab 18 is provided for the operator to board. Additionally, the swing body 12 is equipped with a prime mover and a hydraulic system, among other things.

The front working machine 20 is a multi-jointed arm-type working device for performing operations such as earth and sand excavation, and is attached to the front part of the swing body 12 (in this embodiment, the right side of the operator's cab 18). The front working machine 20 is used for loading operations of transported materials onto hauling vehicles. This front working machine 20 is configured to include a boom 21, an arm 22, and a bucket 23. The transported materials are objects loaded onto hauling vehicles by loading machines such as the hydraulic excavator 1, and may include various items such as earth and sand, debris, building and other demolition materials, ores, and wood chips. However, in the following description of the embodiments, the transported materials are represented by earth and sand.

The boom 21 is rotatably connected to the base frame of the swing body 12, called the swing frame, and rotates up and down relative to the swing body 12 to be driven by a boom cylinder 24. Both ends of the boom cylinder 24 are rotatably connected to the boom 21 and the swing body 12. The arm 22 is rotatably connected to the tip of the boom 21 and rotates back and forth relative to the boom 21 to be driven by an arm cylinder 25. Both ends of the arm cylinder 25 are rotatably connected to the arm 22 and the boom 21. The bucket 23 is rotatably connected to the tip of the arm 22 and rotates up and down relative to the arm 22 to be driven by a bucket cylinder 26. Both ends of the bucket cylinder 26 are rotatably connected to the boom 21 and the bucket 23.

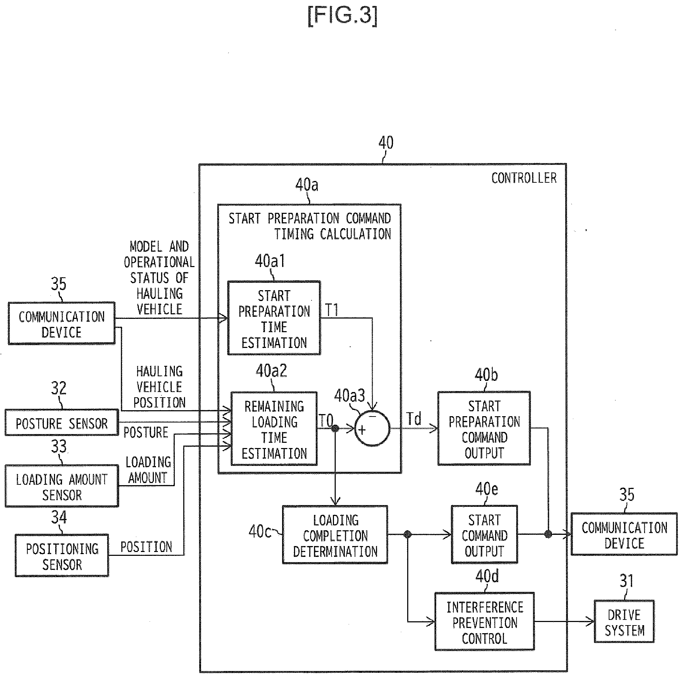

The hydraulic excavator 1 is equipped with a drive system 31, a posture sensor 32 (FIG. 3), a loading amount sensor 33 (FIG. 3), a positioning sensor 34 (FIG. 3), a communication device 35, and a controller 40.

The drive system 31 is a system for driving the drive components of the hydraulic excavator 1, such as the front working machine 20, the travel body 11, and the swing body 12. The drive system 31 is composed of hydraulic equipment such as hydraulic pumps, electrical devices for controlling these hydraulic devices, hydraulic piping, signal lines, and the like.

The posture sensor 32 is a sensor for detecting the posture of the front working machine 20 as one of the operating state data (loading machine-side operating state data) of the hydraulic excavator 1. As the posture sensor 32, angle sensors for detecting the angle of the boom 21 relative to the swing body 12, the angle of the arm 22 relative to the boom 21, and the angle of the bucket 23 relative to the arm 22 can be used. Additionally, accelerometers (e.g., IMUs) based on the direction of gravity can be provided on the boom 21, arm 22, and bucket 23, and these accelerometers can be used as the posture sensor 32. Based on the output of the posture sensor 32, the posture of the front working machine 20, specifically the angles of the boom 21, arm 22, and bucket 23, as well as the position of the bucket 23, are calculated by the controller 40.

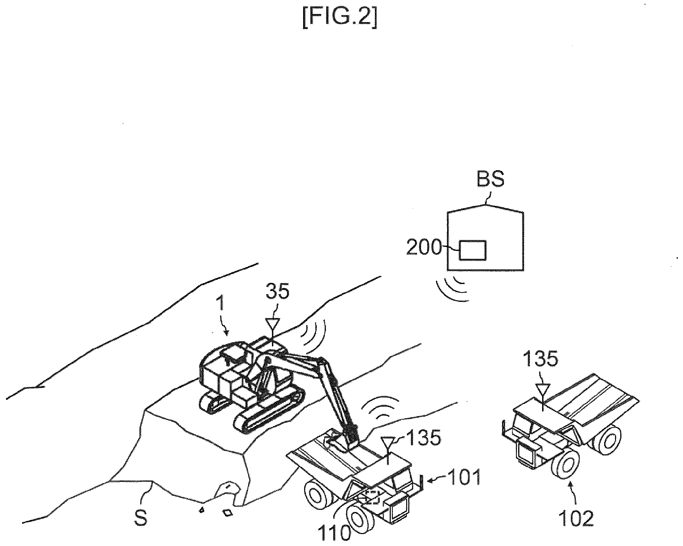

The loading amount sensor 33 is a sensor for detecting the loading weight, which is the weight of earth and sand or the like scooped into the bucket 23 and loaded onto the front working machine 20 to be loaded onto the hauling vehicle 101 (FIG. 2), as one of the operating state data of the hydraulic excavator 1. As the loading amount sensor 33, a pressure gauge for measuring the pressure in the cylinder chamber of the boom cylinder 24 can be used, for example. By using the output of the loading amount sensor 33 as a basis along with the position of the bucket 23 obtained from the output of the posture sensor 32, the loading weight scooped into the bucket 23 is calculated by the controller 40.

The positioning sensor 34 is a sensor for detecting the position of the vehicle body 10. The positioning sensor 34 is a positioning device such as RTK-GNSS (Real Time Kinematic - Global Navigation Satellite System). The global coordinate system position data of the antenna (not shown) installed on the vehicle body 10 is acquired by the positioning sensor 34. By installing two antennas, the direction data of the vehicle body 10 (swing body 12) can also be calculated by the controller 40 from the position data of the two antennas. The position of the vehicle body 10 acquired by the positioning sensor 34 is strictly the position of the antenna installed on the vehicle body 10, but it can be freely converted to a specific position of the vehicle body 10 (for example, the center of rotation position of the vehicle body 10) using known dimension data of the vehicle body 10. Although not specifically shown, a radio that receives correction data from a reference station GNSS (not shown) may be mounted on the hydraulic excavator 1. When this radio is used, the position data of the vehicle body 10 is corrected using the correction data received by the radio.

The communication device 35 is wirelessly connected as appropriate with the communication device 135 of the hauling vehicle (FIG. 2) and the vehicle management device 200 of the base station BS (FIG. 2), and it communicates various data related to commands, notifications, displays, etc., and the operational status data of the vehicle body bidirectionally with the communication device 135 and the vehicle management device 200. The communication device 35 may also be connected to the communication device 135 of the hauling vehicle and the vehicle management device 200 via a repeater (not shown) as necessary.

The controller 40 is an onboard computer mounted on the hydraulic excavator 1, and it has the function of outputting command signals to the drive system 31 and automatically operating the hydraulic excavator 1 regardless of the operator's operation. The controller 40 is connected to the drive system 31 and the communication device 35 via signal lines, and it can output control signals to the drive system 31 and transfer data with the communication device 135 of the hauling vehicle via the communication device 35.

The controller 40 has the function of determining the completion of loading earth and sand onto the hauling vehicle 101 and outputting a start command to the hauling vehicle 101 upon completion of loading, and the function of outputting a start preparation command prior to the start command so that the hauling vehicle 101 can promptly start after loading is completed. The start command and start preparation command are transmitted directly from the controller 40 of the hydraulic excavator 1 to the hauling vehicle 101 via the communication device 35, but they may also be output from the controller 40 to the vehicle management device 200 (FIG. 2) and transmitted to the hauling vehicle 101 via the vehicle management device 200. Furthermore, the start command to the hauling vehicle 101 is not limited to a signal commanding the forced start of the hauling vehicle 101. The start permission notification accompanying the completion of earth and sand loading, for example, in cases where the travel of the hauling vehicle 101 is assumed to follow the control by the vehicle management device 200, the notification forming the start command for the hauling vehicle 101 with the permission from the vehicle management device 200 and the AND condition is also included in the start command. This point depends on the program of the hauling vehicle. The functions and processing procedures of the controller 40 of the hydraulic excavator 1 will be described later.

(2) Work Site

FIG. 2 is a schematic diagram showing an example of a work site where the loading machine according to the first embodiment of the present invention operates. In the work site shown in FIG. 2, the hauling vehicles 101, 102 are parked near the excavation site of the earth and sand S by the hydraulic excavator 1. The hauling vehicle 101 is a vehicle in the process of having earth and sand S loaded by the hydraulic excavator 1, and it is parked so that the load-carrying platform is positioned inside the swing radius of the front working machine 20 of the hydraulic excavator 1. The hauling vehicle 102 is a standby vehicle waiting for the completion of earth and sand S loading onto the hauling vehicle 101, and it has the same configuration as the hauling vehicle 101.

The hauling vehicles 101, 102 are equipped with an onboard computer, the controller 110, a communication device 135, and a positioning sensor (GNSS). The controllers 110 of the hydraulic excavator 1 and the hauling vehicles 101, 102 can wirelessly communicate with each other via the communication devices 35, 135, and they can directly communicate data bidirectionally. However, the configuration is not limited to direct data communication between the hydraulic excavator 1 and the hauling vehicles 101, 102, and it may also be a configuration where data communication is performed via the vehicle management device 200 installed at the base station BS as described above.

In the work site shown in FIG. 2, for example, the hydraulic excavator 1 drives the front working machine 20 to excavate the earth and sand S, which is the transported material, and loads the excavated earth and sand S onto the hauling vehicle 101. The hydraulic excavator 1 repeats the excavation and loading operations several times until the hauling vehicle 101 is fully loaded. When it is determined by the controller 40 that the hauling vehicle 101 is fully loaded, the hydraulic excavator 1 outputs a start command to the hauling vehicle 101 via the communication device 35. Upon receiving the start command via the communication device 135, the hauling vehicle 101 starts and departs from the loading site of the earth and sand S by the hydraulic excavator 1. Subsequently, the hauling vehicle 102, which is waiting near the hydraulic excavator 1, moves and parks near the hydraulic excavator 1, and the hydraulic excavator 1 loads the excavated earth and sand S onto the hauling vehicle 102. In the meantime, the next hauling vehicle arrives at the waiting location. At the work site, this series of processes is repeated.

(3) Controller

FIG. 3 is a block diagram showing the main functions of the controller 40 provided in the loading machine according to the first embodiment of the present invention.

The controller 40 is connected to the communication device 35 via signal lines, and it receives model data, operational status data (hauling vehicle side operational status data), and position data from the hauling vehicle 101 as hauling vehicle information via the communication device 35.

The model data is data that includes information for specifying characteristics (e.g., specifications) related to the transport operation of the hauling vehicle 101, such as the model and type of the hauling vehicle 101, and it is data registered, stored, or received in the controller 110 of the hauling vehicle 101, for example. For example, the model data includes the model name, model code, specifications of the power source and various equipment, specifications related to travel acceleration and travel speed, and the weight of the loadable transported materials of the hauling vehicle 101.

The hauling vehicle side operational status data includes various data (information) related to the current operational status of the hauling vehicle 101, such as the engine being stopped, the engine idling, traveling, dumping, as well as the engine speed and the on/off status of the parking brake. These hauling vehicle side operational status data are obtained by detecting state quantities that vary according to the operation of the engine, actuators, hydraulic pump, etc., of the hauling vehicle 101 with sensors (rotation sensors, pressure sensors, potentiometers, etc.) mounted on the hauling vehicle.

The position data is data of the current position and posture (direction) of the hauling vehicle 101, and it is acquired by the positioning sensor of the hauling vehicle 101.

Additionally, the controller 40 is connected to the posture sensor 32, loading amount sensor 33, positioning sensor 34, and drive system 31 via signal lines. The controller 40 inputs or calculates the posture and position of the front working machine 20 of the hydraulic excavator 1, the weight of the earth and sand S scooped into the bucket 23, and the position and direction of the swing body 12 as loading machine information from the outputs of the posture sensor 32, loading amount sensor 33, and positioning sensor 34.

Here, as described above, the controller 40 has the function of outputting a start command to the hauling vehicle 101 upon completion of loading earth and sand S onto the hauling vehicle 101, and the function of outputting a start preparation command prior to the start command so that the hauling vehicle 101 can promptly start after loading is completed. As details of these functions, the controller 40 is equipped with the functions of start preparation command timing calculation 40a, start preparation command output 40b, loading completion determination 40c, interference prevention control 40d, and start command output 40e. The following describes these functions.

(3.1) Start Preparation Command Timing Calculation 40a

The start preparation command timing calculation 40a is a function that calculates the timing for the hydraulic excavator 1 to output a start preparation command to the hauling vehicle 101 so that the start preparation of the hauling vehicle 101 is completed in time with the completion of loading earth and sand S onto the hauling vehicle 101. The start preparation command timing calculation 40a includes the functions of start preparation time estimation 40a1, remaining loading time estimation 40a2, and difference time calculation 40a3.

(3.1.1) Start Preparation Time Estimation 40a1

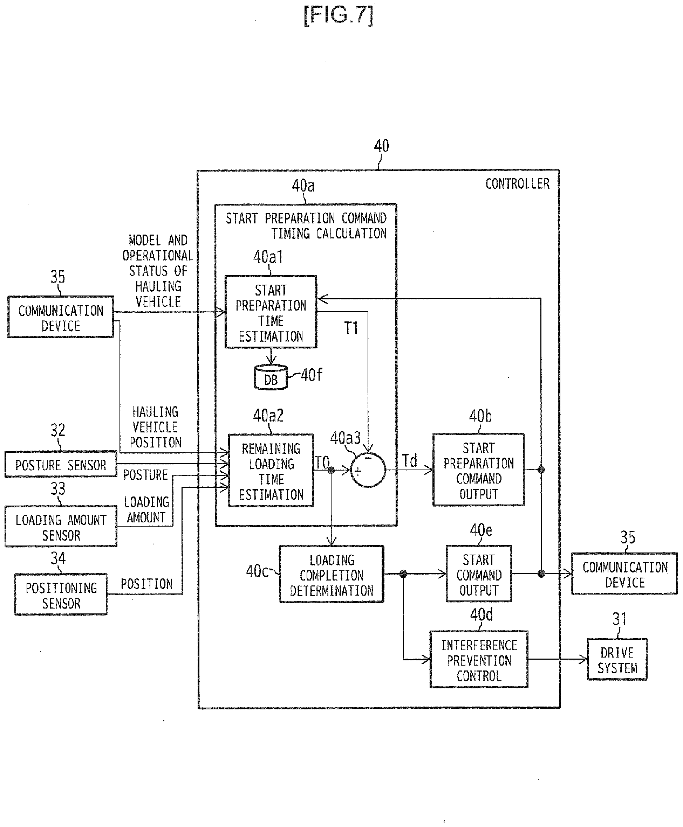

The start preparation time estimation 40a1 is a function that estimates the necessary start preparation time T1 from when the hauling vehicle 101 starts the start preparation until it becomes ready to start, based on the model data of the hauling vehicle 101. The necessary start preparation time T1 is the time required for, for example, the increase in engine speed or brake release of the hauling vehicle. The storage device provided in or connected to the controller 40 (for example, the storage device 40f in FIG. 7) stores a table in which the necessary start preparation time T1 corresponding to each model data of the hauling vehicle is set as a predefined value for each operational status of the hauling vehicle. The operational status of the hauling vehicle includes the engine being stopped, the engine idling, and the on/off status of the parking brake. A table set as a predefined value for each operational status of the hauling vehicle is stored. When executing the function of start preparation time estimation 40a1, the controller 40 reads this table from the storage device and sets the estimated value of the necessary start preparation time T1 based on the received model data and operational status data of the hauling vehicle 101.

In addition, instead of estimating the necessary start preparation time T1 by referring to a table that defines the relationship between the model data of the hauling vehicle, the operational status data on the vehicle side, and the necessary start preparation time T1, a method can be adopted to calculate the necessary start preparation time T1 based on the operational status data on the vehicle side. For example, the controller 40 is programmed to calculate the necessary start preparation time T1 based on the operational status data such as the engine speed and brake on/off status of the hauling vehicle 101. In this case, the controller 40 inputs the model data and operational status data of the hauling vehicle 101 received via the communication device 35, and calculates an estimated value of the necessary start preparation time T1 based on the model data and operational status data of the hauling vehicle 101 according to the program.

(3.1.2) Remaining Loading Time Estimation 40a2

The remaining loading time estimation 40a2 is a function that estimates the remaining loading time T0 required from the current time until the completion of loading earth and sand S onto the hauling vehicle 101, based on the operational status data of the hydraulic excavator 1, which is the operational status data on the loading machine side. As mentioned above, the controller 40 receives the posture data of the front working machine 20 detected by the posture sensor 32 and the loading weight detected by the loading amount sensor 33 as the operational status data of the hydraulic excavator 1. In executing the function of the remaining loading time estimation 40a2, the controller 40 first calculates the relative position with the body 10 of the hauling vehicle 101 based on the position data of the hauling vehicle 101 received via the communication device. Then, the controller 40 calculates the remaining loading time T0 based on the relative position of the hauling vehicle 101, the posture data of the front working machine 20, and the loading weight.

For example, the loading amount loaded onto the hauling vehicle 101 in one excavation loading operation can be calculated based on the distance of the bucket 23 relative to the body 10 obtained from the posture data and the output of the loading amount sensor 33. Accordingly, the remaining loading amount until full load can be calculated from the difference between the accumulated value of the loading amount of earth and sand S onto the hauling vehicle 101 and the full load amount (specified value) of the hauling vehicle 101. Once the remaining loading amount is calculated, the number of excavation loading operations N required for the hauling vehicle 101 to reach a full load state from the current time is determined based on the volume (specified value) of the bucket 23. Additionally, by determining the relative position between the hauling vehicle 101 and the body 10, the trajectory and distance D1 of the front working machine 20 (e.g., bucket 23) per excavation loading operation can be calculated. Based on the distance D1 and the number N, the total trajectory and total distance D2 of the front working machine 20 until the hauling vehicle 101 reaches a full load state from the current time are determined. Then, the time required for the front working machine 20 to operate over the total distance D2, based on the swing speed or excavation speed (specified or measured value), can be determined as the remaining loading time T0. At this time, the moment of inertia during the swing operation of the hydraulic excavator 1 can be calculated based on the loading amount (weight) of earth and sand S measured by the loading amount sensor 33, and the remaining loading time T0 can be accurately calculated by considering the acceleration and deceleration of the swing operation.

The controller 40 sequentially calculates and counts down the series of calculations related to the remaining loading time T0 until the hauling vehicle 101 reaches a full load state, in this embodiment, until the remaining loading time T0 falls below a preset threshold Ts2. The threshold Ts2 is a positive real number that specifies a short time (e.g., about 1 second).

(3.1.3) Difference Time Calculation 40a3

The difference time calculation 40a3 is a function that calculates the difference time Td between the remaining loading time T0 estimated by the function of the remaining loading time estimation 40a2 and the necessary start preparation time T1 estimated by the function of the start preparation time estimation 40a1. For example, the difference time Td can be calculated by the following equation.

$$Td = T0 - T1 \ldots \text{(Equation 1)}$$

In this embodiment, since it is intended to output the start preparation command at a time that is the necessary start preparation time T1 before the estimated completion time of loading earth and sand S onto the hauling vehicle 101, the difference time Td can be said to be the remaining time from the current time until the timing to issue the start preparation command.

(3.2) Start Preparation Command Output 40b

The start preparation command output 40b is a function that determines whether the difference time Td calculated by the function of the difference time calculation 40a3 is below a preset set value Ts1, and outputs a start preparation command to the hauling vehicle 101 via the communication device 35 when the difference time Td falls below the set value Ts1. The set value Ts1 is a positive real number that specifies a short time (e.g., about 1 second). The hauling vehicle 101 that receives the start preparation command promptly begins start preparation prior to the completion of loading earth and sand S, for example, by increasing the engine speed or releasing the parking brake.

(3.3) Loading Completion Determination 40c

The loading completion determination 40c is a function that determines whether the hauling vehicle 101 has reached a full load state and the loading of earth and sand S onto the hauling vehicle 101 is complete. In this embodiment, the controller 40 executes the function of the loading completion determination 40c by determining whether the remaining loading time T0 has fallen below a preset threshold Ts2.

(3.4) Interference Prevention Control 40d

The interference prevention control 40d is a function that outputs a command signal to the drive system 31 to drive the front working machine 20 in order to avoid contact between the front working machine 20 of the hydraulic excavator 1 and the hauling vehicle 101 when the hauling vehicle 101 starts. For example, the controller 40 calculates the position of the front working machine 20 (e.g., bucket 23) relative to the hauling vehicle 101 based on the relative position with the body 10 of the hauling vehicle 101 and the posture data of the front working machine 20. The controller 40 determines whether the front working machine 20 is in a position to interfere with the hauling vehicle 101 when the hauling vehicle 101 starts, based on the calculated position of the front working machine 20 and the position of the hauling vehicle 101. When outputting the start command, if the front working machine 20 is in a position to interfere with the hauling vehicle 101, the controller 40 outputs a command signal to the drive system 31 to move the front working machine 20 to a position that does not interfere with the hauling vehicle 101.

(3.5) Start Command Output 40e

The start command output 40e is a function that outputs a start command signal to the hauling vehicle 101 via the communication device 35. The controller 40 executes the function of the start command output 40e if it determines, as a result of the loading completion determination 40c, that the hauling vehicle 101 has reached a full load state (e.g., when the remaining loading time T0 falls below a preset threshold Ts2). The hauling vehicle 101, having received the start command upon completion of start preparation, starts and departs from the loading location of earth and sand S by the hydraulic excavator 1.

(4) Flowchart

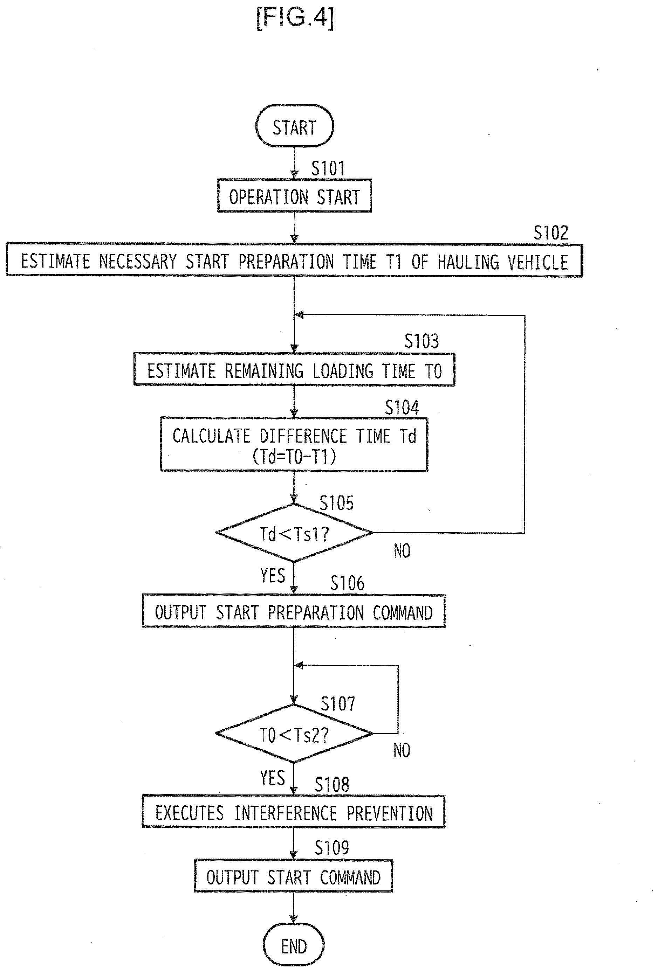

Fig. 4 is an example of a flowchart showing the processing procedure for outputting a start command to the hauling vehicle 101 by the controller 40 provided in the hydraulic excavator 1 according to the first embodiment of the present invention. The controller 40 executes the flow of Fig. 4 each time a new hauling vehicle arrives at the loading position of earth and sand S by the hydraulic excavator 1.

Step S101

When the controller 40 recognizes that the hauling vehicle 101 has arrived and stopped at the loading position by the hydraulic excavator 1 from the hauling vehicle 101 or the vehicle management device 200, it starts the flow of Fig. 4. Upon starting the flow, the controller 40 outputs a command signal to the drive system 31 to execute the excavation loading operation, excavates earth and sand S, and loads the excavated earth and sand S onto the hauling vehicle 101 (Step S101).

Step S102

With the start of the excavation loading operation, the controller 40 receives the model data and operational status data of the hauling vehicle 101 via the communication device 35 and estimates the necessary start preparation time T1 required for the start preparation of the hauling vehicle 101 (Step S102). The calculation procedure for the necessary start preparation time T1 is as previously described as the function of the start preparation time estimation 40a1 (Fig. 3).

Step S103

Also, during the excavation loading operation, the controller 40 sequentially calculates and estimates the remaining loading time T0 as the time required for the hauling vehicle 101 to reach a full load state from the current time (Step 103). The calculation procedure for the remaining loading time T0 is as previously described as the function of the remaining loading time estimation 40a2 (Fig. 3).

Step S104

Once the remaining loading time T0 is calculated, the controller 40 calculates the difference time Td between the necessary start preparation time T1 and the remaining loading time T0, and calculates the remaining time from the current time until the appropriate timing to output the start preparation start command (Step S104). The calculation procedure for the difference time Td is as previously described as the function of the difference time calculation 40a3 (Fig. 3).

Step S105

Once the difference time Td is calculated, the controller 40 compares the difference time Td with the set value Ts1 and determines whether the difference time Td has become smaller than the set value Ts1 (Step S105). If the controller 40 determines that the difference time Td is equal to or greater than the set value Ts1, it returns the procedure to Step S103 and repeats the procedure of Steps S103-S105 until the difference time Td becomes smaller than the set value Ts1.

Step S106

If the controller 40 determines that the difference time Td is smaller than the set value Ts1, it outputs a start preparation command signal to the hauling vehicle 101 via the communication device 35 (Step S106). As a result, the hauling vehicle 101 receives the start preparation command signal via the communication device 135 and begins start preparation (e.g., increasing engine speed, releasing the parking brake) in response to the start preparation command signal. The procedures of Steps S105 and S106 correspond to the function of the start preparation command output 40b (Fig. 3).

Step S107

After outputting the start preparation command signal, the controller 40 counts down the remaining loading time T0 based on the elapsed time from the output of the start preparation command signal and determines whether the remaining loading time T0 has become smaller than the threshold Ts2 (Step S107). If the controller 40 determines that the remaining loading time T0 is equal to or greater than the threshold Ts2, it repeats the procedure of Step S107. The procedure of step S107 corresponds to the function of loading completion determination 40c (FIG. 3).

Step S108

If it is determined that the remaining loading time T0 is below the threshold Ts2, the controller 40 executes the function of the aforementioned interference prevention control 40d (FIG. 3) and, if necessary, commands the drive system 31 to drive the front working machine 20 (step S108).

Step S109

If the remaining loading time T0 is below the threshold Ts2 and there is no concern of interference between the hauling vehicle 101 and the front working machine 20, the controller 40 outputs a start command signal to the hauling vehicle 101 via the communication device 35 (step S109), and ends the flow for the hauling vehicle 101 as shown in FIG. 4. Consequently, the hauling vehicle 101 receives the start command signal via the communication device 135 at the timing when the start preparation is completed and starts in response to the start command signal. The procedure of step S109 corresponds to the function of start command output 40e (FIG. 3).

(5) Timing Chart

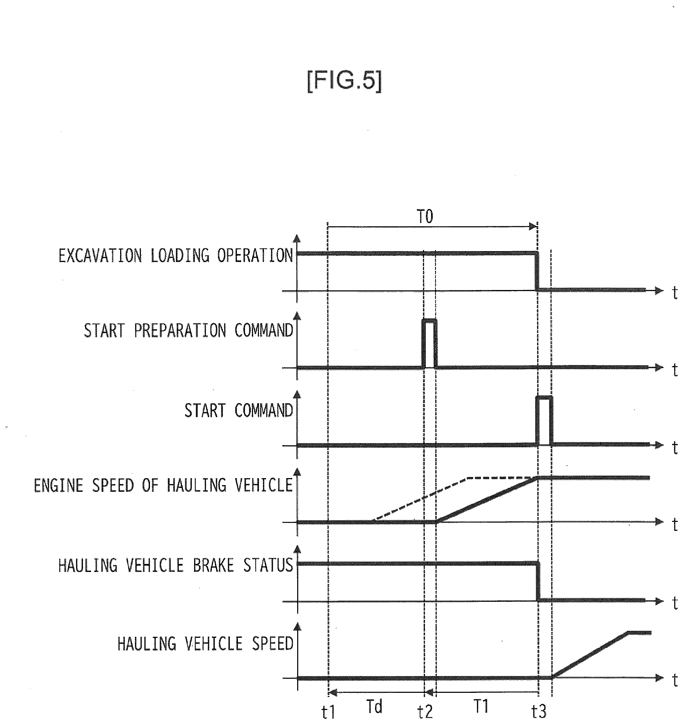

FIG. 5 is an example of a timing chart showing the operation of the hauling vehicle 101 in cooperation with the hydraulic excavator 1 according to the first embodiment of the present invention. In this figure, the remaining loading time T0 is calculated at the current time t1, and the case where the loading work of earth and sand S onto the hauling vehicle 101 by the hydraulic excavator 1 is completed at time t3, which is the time when the remaining loading time T0 elapses from the current time t1, is explained. In this case, the time t2, which is the time t3 minus the already calculated necessary start preparation time T1 at the current time t1, becomes the appropriate timing for the controller 40 of the hydraulic excavator 1 to output the start preparation command to the hauling vehicle 101. The time from the current time t1 to time t2 is the difference time Td, which is the remaining time until the appropriate output timing of the start preparation command. Subsequently, the start preparation command is output at time t2 from the controller 40, and the hauling vehicle 101 that receives the start preparation command begins the start preparation. For example, the engine speed of the hauling vehicle 101 increases from time t2 to time t3, and at a predetermined timing from time t2 to time t3, such as at time t3, the parking brake is released, and the start preparation of the hauling vehicle 101 is also completed at time t3 when the loading work of earth and sand S is completed. Additionally, at time t3, a start command is output from the controller 40 of the hydraulic excavator 1 to the hauling vehicle 101. The hauling vehicle 101 that receives the start command starts and increases its speed to depart from the loading location of earth and sand S by the hydraulic excavator 1.

(6) When the Hauling Vehicle is a Manned Vehicle

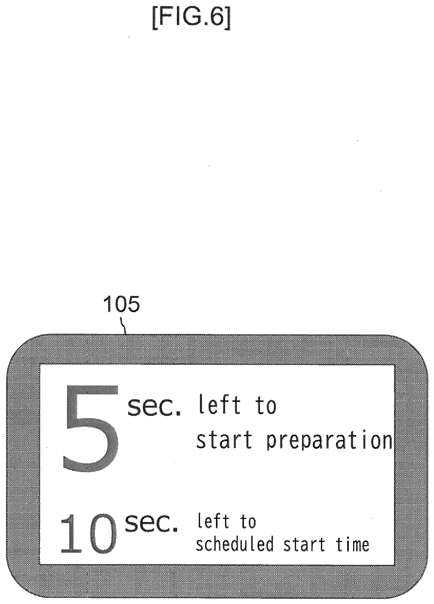

FIG. 6 is an example of a screen displayed on the display device of the hauling vehicle 101 by a display command from the controller equipped in the loading machine according to the first embodiment of the present invention. The hauling vehicle 101 may be either a manned vehicle or an unmanned vehicle. When the hauling vehicle 101 is manned, it is desirable to have a display screen that notifies the operator of the hauling vehicle 101 of the timing for starting the start preparation, as illustrated in FIG. 6, displayed on the display device 105 located in the cab of the hauling vehicle 101 (e.g., in front of the driver's seat). For example, as the difference time Td in steps S104 and S106 is calculated, the data for the display screen (FIG. 6) that shows the timing for outputting the start preparation command is generated based on the difference time Td and output to the hauling vehicle 101 via the communication device 35, configuring the controller 40 accordingly. FIG. 6 represents an example of a display screen where the remaining time until the start preparation command is output from the hydraulic excavator 1 and the remaining time until the start command is output are shown in a countdown display.

According to this display, the operator of the hauling vehicle 101 performs necessary operations for start preparation, such as increasing the engine speed or releasing the parking brake, by the scheduled start time (loading completion time).

(7) When the Hauling Vehicle is an Unmanned Vehicle

Assume that the hauling vehicle 101 is an unmanned vehicle that is autonomously operated by the controller 110 (FIG. 2), i.e., an onboard computer. In this case, when the hauling vehicle 101 receives the start preparation command output from the controller 40 of the hydraulic excavator 1, the start preparation is initiated under the control of the controller 110 in response to the start preparation command. Subsequently, when the start command output from the controller 40 of the hydraulic excavator 1 is received, the hauling vehicle 101 starts under the control of the controller 110 in response to the start command.

However, it is also possible to configure the hauling vehicle 101 to automatically start after the completion of start preparation without waiting for the start command from the hydraulic excavator 1, on the premise that the loading of earth and sand S is completed at the timing when the start preparation initiated in response to the start preparation command is completed.

(8) Effects

(8.1) Improvement of Productivity

For example, in the work site shown in FIG. 2, if the start of the fully loaded hauling vehicle 101 is delayed, the waiting hauling vehicle 102 cannot approach the hydraulic excavator 1. The delay in the start of the hauling vehicle 101 becomes dead time, delaying the start of the loading work for the hauling vehicle 102.

In contrast, in this embodiment, as shown in FIG. 5, the start preparation command for the hauling vehicle 101 is output from the hydraulic excavator 1 in advance of the loading completion, so that the start preparation of the hauling vehicle 101 is completed in synchronization with the progress of the excavation loading operation by the hydraulic excavator 1 and the loading completion. As a result, the start preparation of the hauling vehicle 101 is initiated prior to the completion of the loading of earth and sand S by the hydraulic excavator 1, and the start preparation of the hauling vehicle 101 is completed in synchronization with the loading completion, allowing the hauling vehicle 101 to start promptly after the loading completion. In this way, the dead time due to the delay in the start of the hauling vehicle 101 can be reduced. Moreover, the start preparation command for the hauling vehicle 101 is automatically output from the hydraulic excavator 1, regardless of the operator's instructions. Since the loading of earth and sand S onto the hauling vehicle by the hydraulic excavator 1 is repeated many times a day, the start delay time per loading operation of the hauling vehicle is almost eliminated or significantly reduced, thereby improving the productivity of the site.

(8.2) Cost Reduction

Additionally, if the goal is merely to shorten the delay time of the start of the hauling vehicle 101, it is also possible to output the start preparation command earlier than the scheduled loading completion time by an estimated time longer than the necessary start preparation time T1. However, in this case, the time from the completion of start preparation to the start of the hauling vehicle 101 is extended, and the hauling vehicle 101 must maintain an unnecessarily high engine speed even while stationary, leading to issues such as fuel wastage.

In contrast, according to this embodiment, since the start preparation command is output at the timing when the start preparation is completed in synchronization with the loading completion, fuel wastage can be suppressed, and the operational cost of the work site can be reduced while improving productivity.

(8.3) Efficiency of Loading Work

By the function of the interference prevention control 40d (FIG. 3), even if the front working machine 20 comes to a position that interferes with the hauling vehicle 101 at the time of loading completion, the interference between the starting hauling vehicle 101 and the front working machine 20 can be automatically avoided by the function of the interference prevention control 40d. Therefore, for example, it is not necessary to set the trajectory of the bucket 23 during the loading work unnecessarily high relative to the hauling vehicle 101 to prevent the front working machine 20 from stopping at a position that interferes with the hauling vehicle 101 at the time of loading completion. Since it is not necessary to make the trajectory of the front working machine 20 during excavation work unnecessarily wide, the waste in the operation of the hydraulic excavator 1 can be reduced, and the effects of suppressing the deterioration of fuel efficiency and improving the work speed of the hydraulic excavator 1 can be expected.

(8.4) Adaptation to Manned Vehicles

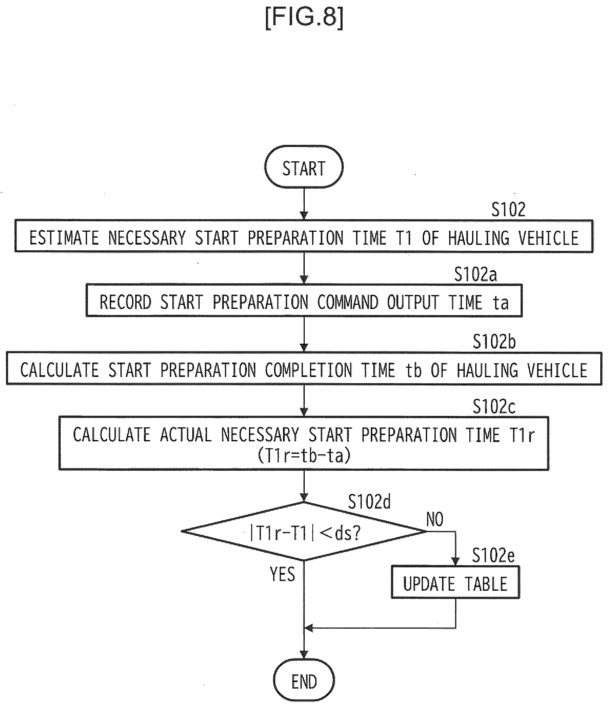

When the hauling vehicle 101 is an unmanned vehicle, the start preparation of the hauling vehicle 101 can be initiated in conjunction with the automatic control function of the hauling vehicle 101 by the output of the start preparation command, but it is also assumed that the hauling vehicle 101 is a manned vehicle without an automatic control function. Even in this case, by notifying the operator of the hauling vehicle 101 of the timing for outputting the start preparation command via the display device 105 of the hauling vehicle 101, as illustrated in FIG. 8, the operator can be prompted to perform the start preparation at the appropriate timing. This allows the hauling vehicle 101 to be started promptly after the loading completion.

(Second Embodiment)

In the first embodiment, it is assumed that the necessary start preparation time T1 corresponding to the model data and operating state data for the hauling vehicle 101 is known. In other words, in a situation where an unknown model of hauling vehicle, for which there is no operational example at the work site, is introduced, and the data on the model or specifications of the unknown hauling vehicle is not specified in the table, the necessary start preparation time T1 cannot be estimated. Additionally, even for a known hauling vehicle, there may be a significant difference between the necessary start preparation time T1 specified in the table and the actual appropriate value. The second embodiment is an example that addresses these points.

FIG. 7 is a block diagram representing the main functions of the controller 40 of the hydraulic excavator 1 according to the second embodiment of the present invention, corresponding to FIG. 3 of the first embodiment. In FIG. 7, the same or corresponding elements as those in the first embodiment are denoted by the same reference numerals as in the previously presented drawings, and the explanation is omitted.

The point where this embodiment differs from the first embodiment is that the function of the start preparation time estimation 40a1 includes a function to update the table by feeding back the actual results.

The storage device 40f provided in or connected to the controller 40 stores a table in which the necessary start preparation time T1 corresponding to each model data of the hauling vehicle, as mentioned in the first embodiment, is set as a predefined value for each operating state of the hauling vehicle (e.g., engine stopped). Additionally, if the model data of the hauling vehicle 101 received via the communication device 35 is unknown, the controller 40 creates and records a new table related to the received model data in the storage device 40f. In the newly created table, since the data for the required start preparation time T1 for each operating state of the hauling vehicle 101 is unknown, a predetermined value is initially registered.

The controller 40 sequentially receives data such as the engine speed and the on/off status of the parking brake of the hauling vehicle 101 as operational state data via the communication device 35. The controller 40, similar to the first embodiment, calculates the required start preparation time T1 from the received model data of the hauling vehicle 101, and sequentially outputs the start preparation command and start command as the excavation loading work progresses.

In this embodiment, after outputting the start preparation command, the controller 40 calculates the actual start preparation time T1r required by the hauling vehicle 101 based on the operational state data of the hauling vehicle 101 received sequentially. The actual start preparation time T1r can be calculated as the time from when the start preparation command is output until the engine speed of the hauling vehicle 101 reaches a certain value and the parking brake is released.

After calculating the actual start preparation time T1r, the controller 40 determines the absolute difference between the required start preparation time T1, which was the basis for the output of the start preparation command, and the actual start preparation time T1r, and checks if this difference is smaller than a preset reference value ds. The reference value ds is a positive real number that specifies a short time (for example, about 1 second). If the magnitude of the difference between the necessary start preparation time T1 and the actual start preparation time T1r is smaller than the preset reference value ds, it means that the necessary start preparation time T1 specified in the table is appropriate. In this case, the controller 40 maintains the value of the necessary start preparation time T1 in the table related to the hauling vehicle 101 stored in the storage device 40f. Conversely, if the magnitude of the difference between the necessary start preparation time T1 and the actual start preparation time T1r is equal to or greater than the preset reference value ds, it means that there is an excess or deficiency in the necessary start preparation time T1 specified in the table. In this case, the controller 40 updates the necessary preparation time T1 based on the actual start preparation time T1r in the table related to the hauling vehicle 101 stored in the storage device 40f.

FIG. 8 is an example of a flowchart showing the procedure for updating the necessary start preparation time T1 by the controller 40 of the hydraulic excavator 1 in the second embodiment of the present invention. The procedure for updating the necessary start preparation time T1 represented in the flowchart of FIG. 8 is included in the function of start preparation time estimation 40a1.

Step S102

When the controller 40 recognizes that the hauling vehicle 101 has stopped at the loading position of the hydraulic excavator 1, it executes the flow of FIG. 4 as in the first embodiment and estimates the necessary start preparation time T1 for the hauling vehicle 101 (Step S102). If the model data of the hauling vehicle 101 is known, the necessary start preparation time T1 is calculated according to the table already stored in the storage device 40f, as in the first embodiment. If the model data of the hauling vehicle 101 is unknown, a new table with the necessary start preparation time T1 as a predetermined value is created for the model data by the controller 40 and recorded in the storage device 40f, and the necessary start preparation time T1 is calculated according to the new table.

Step S102a

After calculating the necessary start preparation time T1, the controller 40 executes the processes from step S103 onward in FIG. 4, and records the start preparation command output time ta in the storage device 40f along with the output of the start preparation command to the hauling vehicle 101 (Step S102a).

Step S102b

After the output of the start preparation command (after recording the start preparation command output time ta), the controller 40 calculates the start preparation completion time tb, which is when the start preparation of the hauling vehicle 101 is actually completed, based on the real-time operational state data of the hauling vehicle 101 (Step S102b).

Step S102c

After calculating the start preparation completion time tb, the controller 40 calculates the time from the start preparation command output time ta to the start preparation completion time tb, that is, the actual start preparation time T1r ($=tb-ta$) (Step S102c).

Step S102d

After calculating the actual start preparation time T1r, the controller 40 calculates the difference ($|T1r-T1|$) between the necessary start preparation time T1 estimated in step S102 and the actual start preparation time T1r, and determines whether this difference is smaller than the reference value ds (Step S102d). If it is determined that the magnitude of the difference between the necessary start preparation time T1 and the actual start preparation time T1r is smaller than the reference value ds, the controller 40 ends the flow of FIG. 8 without changing the necessary start preparation time T1 in the table specified for the hauling vehicle 101.

Step S102e

If the magnitude of the difference between the necessary start preparation time T1 and the actual start preparation time T1r is equal to or greater than the reference value ds, the controller 40 corrects and updates the necessary start preparation time T1 in the table specified for the hauling vehicle 101 and ends the flow of FIG. 8 (Step S102e). In this example, the correction value $\Delta T$ is calculated using the following formula, and the necessary start preparation time T1 is corrected by the correction value $\Delta T$. $\Delta T = T1r - T1 - ds$ ... (Equation 2)

If the correction value $\Delta T$ is positive, it means that the actual start preparation time T1r is longer than the necessary start preparation time T1 estimated in step S102. In this case, the controller 40 subtracts the value of $\Delta T$ from the required start preparation time T1 specified in the table for the hauling vehicle 101 and updates the necessary start preparation time T1 to the value after subtraction. On the other hand, if the correction value $\Delta T$ is negative, it means that the actual start preparation time T1r is shorter than the necessary start preparation time T1 estimated in step S102. In this case, the controller 40 adds the absolute value of $\Delta T$ to the necessary start preparation time T1 specified in the table for the hauling vehicle 101 and updates the necessary start preparation time T1 to the value after addition.

In other respects, this embodiment is similar to the first embodiment.

According to this embodiment, in addition to the effects similar to the first embodiment, there is an advantage of calculating the necessary start preparation time T1 for an unknown model of hauling vehicle and outputting the start preparation command to suppress the delay time of the vehicle's start. Furthermore, if the value of the necessary start preparation time T1 linked to the model of the hauling vehicle lacks validity, the value of the necessary start preparation time T1 is updated through feedback of actual values, and the validity of the necessary start preparation time T1 improves with the accumulation of actual results. As a result, the estimation accuracy of the necessary start preparation time T1 can improve with the accumulation of actual results at the work site, potentially enhancing productivity.

(Third Embodiment)

In the first and second embodiments, the case where the start preparation command is output by the controller 40 mounted on the hydraulic excavator 1 was explained as an example, but such a configuration is not necessarily limited to achieve the intended effects. For example, a configuration can be adopted where the timing of the start preparation command and start command is calculated by a computer installed at a location remote from the hydraulic excavator 1 or the hauling vehicle 101, such as the vehicle management device 200 (FIG. 2), and these commands are output to the hauling vehicle 101.

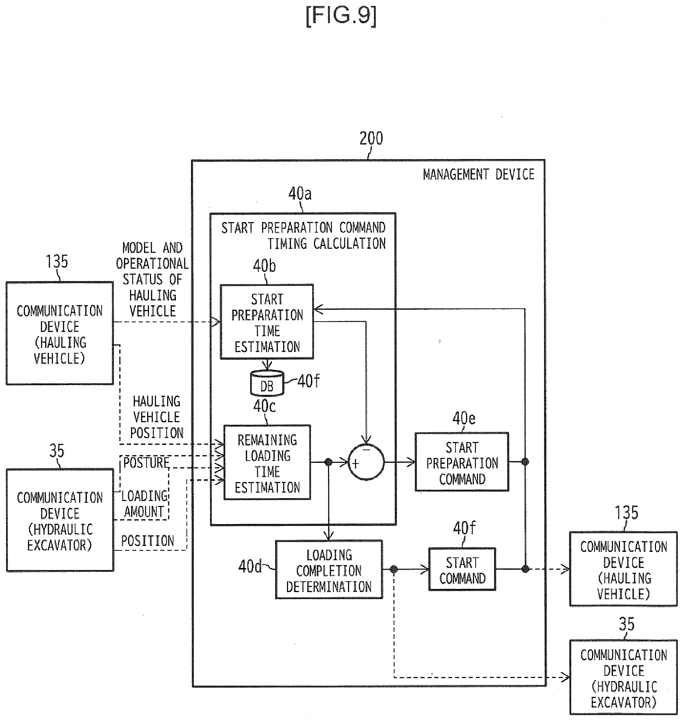

FIG. 9 is a block diagram showing the main functions of the vehicle management device according to the third embodiment of the present invention, corresponding to FIG. 3 of the first embodiment. In FIG. 9, the same or corresponding elements as those in the first or second embodiment are denoted by the same reference numerals as in the previous drawings, and the explanation is omitted.

The vehicle management device 200 shown in FIG. 9 can communicate with each controller 40, 110 of the hydraulic excavator 1 and the hauling vehicle 101 via communication devices 35, 135. The vehicle management device 200 receives various data such as model data, operational state data, and position data of the hauling vehicle 101, which are sequentially transmitted from the hauling vehicle 101. Additionally, the vehicle management device 200 also receives various data such as model data, operational state data, and position data of the hydraulic excavator 1, which are sequentially transmitted from the hydraulic excavator 1. The vehicle management device 200 is equipped with the functions of start preparation command timing calculation 40a, start preparation command output 40b, loading completion determination 40c, and start command output 40e, which were provided in the controller 40 of the hydraulic excavator 1 in the first and second embodiments. These functions are the same as in the first and second embodiments.

Thus, in this embodiment, the remaining loading time T0 required from the current time until the completion of loading the transported materials onto the hauling vehicle 101 is estimated by the vehicle management device 200 based on the operational state data of the hydraulic excavator 1 received from the hydraulic excavator. Additionally, in the vehicle management device 200, the required start preparation time T1 from when the hauling vehicle 101 starts the start preparation until it becomes ready to start is estimated based on the model data of the hauling vehicle 101. Then, similar to the first and second embodiments, the timing of the start preparation command and start command for the hauling vehicle 101 is calculated and output while counting down the difference time Td. The function of displaying the timing of the start preparation command (FIG. 6) can also be provided in the vehicle management device 200. The function of interference prevention control 40d (FIG. 3) can also be provided in the vehicle management device 200, but in this example, it is provided in the controller 40 of the hydraulic excavator 1, and the controller 40 executes the process upon receiving the loading completion determination from the vehicle management device 200. Additionally, the vehicle management device 200 can be equipped with an update function for the necessary start preparation time T1 of the second embodiment.

In other respects, this embodiment is similar to the first or second embodiment and can achieve the same effects as the first or second embodiment.

Description of Reference Characters

1... hydraulic excavator (loading machine), 10...vehicle body, 20...front working machine (working device), 32...posture sensor, 33...loading amount sensor, 34...positioning sensor, 35... communication device, 40...controller, 40a1...start preparation time estimation function, 40a2... remaining loading time estimation function, 40a3...difference time calculation function, 40b...start preparation command output function, 40d...interference prevention control function, 101,102...hauling vehicle, 135...communication device, 200...vehicle management device, 105... display device, ds... reference value, t1... current time, TO... remaining loading time, T1...necessary start preparation time, T1r...actual start preparation time, Td...difference time, Ts1...set value, Ts2... threshold

**Claims**

1.  A loading machine comprising:

    a vehicle body;
    a working device attached to the vehicle body to perform loading operations of transported materials onto a hauling vehicle;
    a communication device that communicates with the hauling vehicle directly or via a vehicle management device, and
    a controller that determines the completion of loading of transported materials onto the hauling vehicle and outputs a start command to the hauling vehicle via the communication device; wherein
    the controller is configured to
    store or receive model data containing information indicating characteristics related to a transport operation of the hauling vehicle and estimate a necessary start preparation time from when the hauling vehicle begins start preparation until it is in a state ready to start based on the model data;
    estimate a remaining loading time required from the current time until a completion of loading of transported materials onto the hauling vehicle based on a loading machine-side operational status data, which is an operational status data of the loading machine;
    calculate a difference time between the estimated remaining loading time and the necessary start preparation time; and
    output a start preparation command to the hauling vehicle via the communication device when the calculated difference time falls below a preset set value.

2. The loading machine according to claim 1, wherein

the controller is configured to
receive a hauling vehicle-side operational status data, which is an operational status data containing information related to an operational status of the hauling vehicle, via the communication device, and
estimate the necessary start preparation time based on the model data and the hauling vehicle-side operational status data.

3. The loading machine according to claim 1, wherein

the controller is configured to
store a table that defines a relationship between the model data, the hauling vehicle-side operational status data, which is an operational status data containing information related to an operational status of the hauling vehicle, and the necessary start preparation time;
input the model data and the hauling vehicle-side operational status data received via the communication device, and
refer to the table and estimates the necessary start preparation time based on the model data and the hauling vehicle-side operational status data.

4. The loading machine according to claim 3, wherein

the controller is configured to
receive the hauling vehicle-side operational status data via the communication device,
calculate an actual start preparation time required for the hauling vehicle to start preparation after outputting the start preparation command based on the received hauling vehicle-side operational status data;
update the table based on the actual start preparation time if the difference between the necessary start preparation time and the actual start preparation time is equal to or greater than a preset reference value.

5. The loading machine according to claim 1, wherein

the loading machine further comprises
a posture sensor that detects a posture of the working device,
a loading amount sensor that detects a loading weight, which is a weight of the transported materials to be loaded on the working device and loaded onto the hauling vehicle, and
a positioning sensor that detects the position of the vehicle body,
the controller is configured to
input the posture data of the working device detected by the posture sensor and the loading weight detected by the loading amount sensor as the loading machine-side operational status data;
calculate a relative position of the hauling vehicle with respect to the vehicle body based on the position data of the hauling vehicle received via the communication device; and
estimate the remaining loading time based on the relative position of the hauling vehicle, the posture data, and the loading weight.

6. The loading machine according to claim 5, wherein

the controller is configured to
calculate a position of the working device relative to the hauling vehicle based on the relative position of the hauling vehicle and the posture data, and
move the working device to a position that does not interfere with the hauling vehicle if the working device is in a position that interferes with the hauling vehicle when outputting the start command.

7. The loading machine according to claim 1, wherein the controller is configured to output the start command when the remaining loading time falls below a preset threshold.

8. The loading machine according to claim 1, wherein

the controller is configured to
generate display screen data that displays a timing for outputting the start preparation command based on the difference time when calculating the differential time, and
output the display screen data to the hauling vehicle via the communication device.

9. A vehicle management device being capable of communicating with a loading machine equipped with a vehicle body and a working device connected to the vehicle body, and a hauling vehicle onto which transported materials are loaded by the loading machine,

the vehicle management device is configured to
receive the loading machine-side operational status data, which is an operational status data of the loading machine, from the loading machine, and estimates a remaining loading time required from the current time until a completion of loading of transported materials onto the hauling vehicle based on the loading machine-side operational status data;

store or receive model data containing information indicating characteristics related to a transport operation of the hauling vehicle and estimate a necessary start preparation time from when the hauling vehicle begins start preparation until it is in a state ready to start based on the model data;

calculate a difference time between the estimated remaining loading time and the necessary start preparation time; and

output a start preparation command to the hauling vehicle when the calculated difference time falls below a preset set value.

[FIG.1]

[FIG.2]

[FIG.3]

## [FIG.4]

```
          START
            │ S101
            ▼
    OPERATION START
            │
            ▼                                                    S102
ESTIMATE NECESSARY START PREPARATION TIME T1 OF HAULING VEHICLE
                    │
                    ▼                              S103
        ESTIMATE REMAINING LOADING TIME T0
                    │
                    ▼                    S104
        CALCULATE DIFFERENCE TIME Td
              (Td=T0-T1)
                    │
                    ▼  S105
              ◇ Td<Ts1? ◇───────── NO ──┐
                    │ YES                 │
                    ▼  S106               │
        OUTPUT START PREPARATION COMMAND  │
                    │                     │
                    ▼  S107               │
              ◇ T0<Ts2? ◇── NO ──┐
                    │ YES          │
                    ▼  S108
        EXECUTES INTERFERENCE PREVENTION
                    │ S109
                    ▼
        OUTPUT START COMMAND
                    │
                    ▼
                  END
```

[FIG.5]

[FIG.6]

105

**5** sec. left to
start preparation

**10** sec. left to
scheduled start time

[FIG.7]

# [FIG.8]

```
                    START
                      |
                      v                              S102
  ESTIMATE NECESSARY START PREPARATION TIME T1 OF HAULING VEHICLE
                      |
                      v                          S102a
      RECORD START PREPARATION COMMAND OUTPUT TIME ta
                      |
                      v                              S102b
  CALCULATE START PREPARATION COMPLETION TIME tb OF HAULING VEHICLE
                      |
                      v                         S102c
      CALCULATE ACTUAL NECESSARY START PREPARATION TIME T1r
                         (T1r=tb-ta)
                      |
                      v           S102d
                                           NO
                  |T1r-T1|<ds?  --------->
                      |                       S102e
                   YES |                  UPDATE TABLE
                      |                        |
                      v<------------------------
                    END
```

[FIG.9]

**EP 4 589 080 A1**

## INTERNATIONAL SEARCH REPORT

| International application No. |
| --- |
| **PCT/JP2023/030802** |

| A. | CLASSIFICATION OF SUBJECT MATTER |
| --- | --- |

*E02F 9/20*(2006.01)i; *E02F 9/26*(2006.01)i
FI:    E02F9/20 N; E02F9/20 M; E02F9/26 A

According to International Patent Classification (IPC) or to both national classification and IPC

| B. | FIELDS SEARCHED |
| --- | --- |

Minimum documentation searched (classification system followed by classification symbols)

E02F9/20; E02F9/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2020-20156 A (KOMATSU MFG CO LTD) 06 February 2020 (2020-02-06)<br>entire text, all drawings | 1-9 |
| A | US 2017/0191865 A1 (VOLVO CONSTRUCTION EQUIPMENT AB) 06 July 2017 (2017-07-06)<br>entire text, all drawings | 1-9 |
| A | JP 2019-85815 A (KOMATSU MFG CO LTD) 06 June 2019 (2019-06-06)<br>entire text, all drawings | 1-9 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 September 2023** | **03 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/030802**

| Patent document cited in search report | | | Publication date (day/month/year) | Patent family member(s) | | | Publication date (day/month/year) |
|---|---|---|---|---|---|---|---|
| JP | 2020-20156 | A | 06 February 2020 | US | 2021/0363726 | A1 | |
| | | | | entire text, all drawings | | | |
| | | | | WO | 2020/026506 | A1 | |
| | | | | CN | 111757963 | A | |
| US | 2017/0191865 | A1 | 06 July 2017 | CN | 106574862 | A | |
| | | | | entire text, all drawings | | | |
| | | | | WO | 2015/194999 | A1 | |
| JP | 2019-85815 | A | 06 June 2019 | US | 2020/0380628 | A1 | |
| | | | | entire text, all drawings | | | |
| | | | | WO | 2019/092965 | A1 | |
| | | | | CN | 110546091 | A | |

Form PCT/ISA/210 (patent family annex) (January 2015)

**EP 4 589 080 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020020156 A